(19) Europäisches Patentamt
European Patent Office
Office européen des brevets

(11) **EP 3 258 176 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(51) Int Cl.:
*F24C 7/08* (2006.01)    *G01K 3/00* (2006.01)
*G01K 13/10* (2006.01)

(21) Anmeldenummer: **17160373.1**

(22) Anmeldetag: **10.03.2017**

(54) **HAUSHALTS-GARGERÄT UND VERFAHREN ZUM BETREIBEN EINES SOLCHEN**

DOMESTIC COOKING DEVICE AND METHOD FOR OPERATING SUCH A DEVICE

APPAREIL DE CUISSON MÉNAGER ET PROCÉDÉ DE FONCTIONNEMENT D'UN TEL APPAREIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2016 DE 102016206331**

(43) Veröffentlichungstag der Anmeldung:
**20.12.2017 Patentblatt 2017/51**

(73) Patentinhaber: **BSH Hausgeräte GmbH**
**81739 München (DE)**

(72) Erfinder:
• **Bauer, Hans-Jürgen**
  **83278 Traunstein (DE)**
• **Koch, Bernhard**
  **83334 Inzell (DE)**
• **Schönhuber, Josef**
  **83365 Nussdorf (DE)**

(56) Entgegenhaltungen:
DE-A1-102004 049 927     US-A- 5 841 682
US-A1- 2003 152 278     US-A1- 2006 257 036

EP 3 258 176 B1

**Beschreibung**

Die Erfindung betrifft ein Haushaltsgargerät, sowie ein Verfahren zum Betreiben eines solchen Haushaltsgargeräts gemäß den unabhängigen Ansprüchen.

Bekannt sind Sensoren in Backöfen, die eingesetzt werden, um ein Garende eines Backvorgangs zu ermitteln. Solche Sensoren umfassen Feuchtesensoren oder Sauerstoff-Sensoren. Das Signal dieser Sensoren wird ausgewertet, um das Garende und eine voraussichtliche Restdauer des Garvorgangs in einem Backofen zu ermitteln.

DE 10 2012 222 165 A1 offenbart ein Gargerät, aufweisend einen Garraum zum Garen von Gargut, zumindest einen in dem Garraum angeordneten Sensor zum Bestimmen eines aktuellen Signalverlaufs einer Gaskonzentration in dem Garraum, einen Speicher zum Speichern einer Mehrzahl von Referenzsignalverläufen für die Gaskonzentration in dem Garraum und eine Steuereinrichtung zum Bestimmen einer Restgarzeit des Garguts mittels eines Vergleichs des bestimmten aktuellen Signalverlaufs mit der Mehrzahl der gespeicherten Referenzsignalverläufe.

DE 10 2012 222 166 A1 offenbart ein Gargerät, aufweisend einen Garraum zum Garen von Gargut, einen in dem Garraum angeordneten Sensor zum Bestimmen von Signalwerten einer Gaskonzentration in dem Garraum und eine Steuereinrichtung zum Bestimmen einer Restgarzeit des Garguts mittels einer linearen Verknüpfung von zumindest zwei zu unterschiedlichen Zeitpunkten von dem Sensor bestimmten Signalwerten der Gaskonzentration in dem Garraum.

DE 10 2004 049 927 A1 offenbart ein Verfahren zur Steuerung eines Garvorgangs bei einem Gargerät mit einem Garraum, mit mindestens einem Sensor zur Erfassung einer Gaskonzentration in dem Garraum und mit einer elektrischen Steuerung, die eine Auswerteschaltung mit einem Zeitglied und einen Speicher aufweist und mit dem Sensor in Signalübertragungsverbindung steht, wobei in dem Speicher eine Vielzahl von Referenzwertemengen abgespeichert ist, die jeweils dem zeitlichen Verlauf einer Referenzfunktion von einem Startzeitpunkt t0 bis zu jeweils einem Endezeitpunkt t eines Garvorgangs entsprechen und denen jeweils Parametersätze für die elektrische Steuerung zugeordnet sind, wobei das Verfahren die folgenden Verfahrensschritte aufweist: aus der während des Garvorgangs erfassten Gaskonzentration wird in der Auswerteschaltung eine Wertemenge erzeugt, die dem zeitlichen Verlauf einer von der Gaskonzentration abhängigen Funktion von dem Startzeitpunkt t0 bis zu einem momentanen Zeitpunkt tn während des Garvorgangs entspricht, in der Auswerteschaltung wird aus den Referenzwertemengen jeweils eine Vergleichswertemenge für den Vergleich zum Zeitpunkt tn erzeugt, die Wertemenge wird in der Auswerteschaltung mit der Vielzahl von Vergleichswertemengen verglichen, eine Mehrzahl von der Wertemenge ähnlichsten Vergleichswertemengen wird mittels der Auswerteschaltung automatisch ausgewählt und aus den zugeordneten Parametersätzen wird über eine Rechenvorschrift der für die elektrische Steuerung bis zu dem nächsten Vergleich zum Zeitpunkt tn+1 verwendete Parametersatz, insbesondere der Garendezeitpunkt, erzeugt, und das Verfahren wird automatisch beendet, sobald ein mittels der Auswerteschaltung und in Abhängigkeit der durchgeführten Vergleiche ermittelter Garendezeitpunkt erreicht worden ist.

DE 10 2007 040 316 A1 offenbart ein Verfahren zur Anzeige einer Restgarzeit während eines Garvorgangs in einem Gargerät mit einem durch eine Tür verschließbaren Garraum, einer Heizeinrichtung, einer Anzeigeeinrichtung, einer Bedieneinrichtung, einer Speichereinrichtung, einer Steuer- oder Regeleinrichtung und zumindest einer Sensiereinrichtung, wobei über die Bedieneinrichtung zumindest eine Soll-Gargutgröße und/oder Soll-Gargröße eingestellt werden kann, in deren Abhängigkeit die Restgarzeit bestimmt wird, um dann auf der Anzeigeeinrichtung angezeigt zu werden, dadurch gekennzeichnet, dass in einer ersten Phase I des Garvorgangs ein in Abhängigkeit von zumindest einer eingestellten Soll-Gargutgröße und/oder Soll-Gargröße abgeschätzter Maximal- und/oder Minimalwert der Restgarzeit angezeigt wird, und in zumindest einer weiteren Phase II, III des Garvorgangs eine in Abhängigkeit von einem Vergleich zwischen in der Speichereinrichtung hinterlegten Werten und zumindest einem über die Sensiereinrichtung erfassten Wert zumindest einer Gargutgröße und/oder Gargröße bestimmte Restgarzeit angezeigt wird.

EP 1 489 361 A2 offenbart ein Verfahren zur Steuerung eines Garvorgangs bei einem Gargerät mit einem Garraum, an bzw. in dem eine Heizquelle zur Beheizung des Garraums angeordnet ist, mit einem Sensor zur Erfassung einer Gaskonzentration in dem Garraum und einer elektrischen oder elektronischen Steuerung, die eine Auswerteschaltung und einen Speicher aufweist und mit dem Sensor in Signalübertragungsverbindung steht, wobei das Verfahren die folgenden Verfahrensschritte aufweist: Erstens, Ermittlung eines in dem Speicher abgespeicherten Garendewerts in Abhängigkeit eines manuell ausgewählten bzw. automatisch erkannten Garguts, mittels der Auswerteschaltung, zweitens, Verarbeitung des Ausgangssignals des Sensors in der Auswerteschaltung zur Erzeugung eines Garquotienten, wobei der Garquotient dem Verhältnis der ersten Ableitung des Ausgangssignals nach der Zeit t' zu einem zeitlich vorher und nach dem Beginn des Garvorgangs ermittelten erstmaligen Extremwert der ersten Ableitung des Ausgangssignals nach der Zeit t(extrem) entspricht, drittens, Vergleich des Werts des Garquotienten mit dem Garendewert in der Auswerteschaltung und viertens, Auslösen einer Gargerätfunktion erfolgt, sobald der Wert des Garquotienten nach dem Beginn des Garvorgangs den Garendewert unterschreitet. Auf diese Weise ist ein Verfahren zur Steuerung eines Garvorgangs angegeben, bei dem die Steuerung auch für unterschiedliche Gargüter und für unterschiedliche Mengen und Verteilungen eines Garguts in dem Garraum auf einfache Weise realisiert ist und unabhängig von dem zu behandelnden Gargut gleichzeitig eine Restgarzeit mit einer hohen Genauigkeit und Reproduzierbarkeit ermittelt werden kann.

Bei den obigen Gargeräten und Verfahren ist es nachteilig, dass dabei ein hoher Rechenaufwand und ein hoher Speicherbedarf benötigt werden.

Es ist die Aufgabe der vorliegenden Erfindung, die Nachteile des Standes der Technik zumindest teilweise zu überwinden und insbesondere eine Möglichkeit bereitzustellen, Sensordaten eines Haushalts-Gargeräts mit einem besonders geringen Rechenaufwand und einem besonders geringen Speicherbedarf aufzuwerten und beispielsweise zur Steuerung des Haushalts-Gargeräts nutzen, insbesondere zum Bestimmen einer Restgarzeit und/oder eines Garzeitendes.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird unter anderem gelöst durch ein Haushalts-Gargerät, aufweisend mindestens einen Garsensor zur Aufnahme von Messwerten ("Garmesswerten"), einen ersten Datenspeicher zur Speicherung der Garmesswerte als mindestens eine Messkurve, einen zweiten Datenspeicher, in dem mehrere Referenzen gespeichert sind, eine Datenverarbeitungseinrichtung zum Vergleich mindestens einer Messkurve mit den zugehörigen Referenzen, wobei die Referenzen reduzierte Sätze von Koeffizienten einer diskreten Transformation einer jeweiligen Referenzkurve sind, wobei die Datenverarbeitungseinrichtung Koeffizienten einer diskreten Transformation der Messkurve mit einer gleichen Zahl von Koeffizienten der jeweiligen Referenzkurven vergleicht, daraus diejenige Referenzkurve identifiziert, deren Abweichung zu der Messkurve am geringsten ist, wobei die Datenverarbeitungseinrichtung unter Kenntnis der identifizierten Referenzkurve eine Aktion auslöst.

Dadurch wird der Vorteil erreicht, dass ein erheblich kleinerer Datensatz in dem zweiten Datenspeicher gespeichert zu werden braucht als bei einer herkömmlichen Speicherung aller Datenpunkte der Referenzkurven. Auch kann der Vergleich mit einem erheblich geringeren Berechnungsaufwand ablaufen, insbesondere unter überwiegender Nutzung nur einfacher Berechnungsvorschriften wie Additionen und Multiplikationen. So lässt sich das Vergleichen auf einem Mikrocontroller in einer Steuerelektronik des Haushalts-Gargeräts realisieren.

Das Haushalts-Gargerät kann einen Garraum und/oder ein Kochfeld aufweisen. Falls das Haushalts-Gargerät einen Garraum aufweist, kann dieser ein Ofenraum eines Backofens sein. Das Haushalts-Gargerät kann eine Dampffunktionalität und/oder eine Mikrowellenfunktionalität aufweisen.

Der erste Datenspeicher und der zweite Datenspeicher können unterschiedliche Datenspeicher sein. Der erste Datenspeicher kann ein flüchtiger Speicher, z.B. ein RAM, sein. Der zweite Datenspeicher kann ein nichtflüchtiger Speicher sein, z.B. ein ROM, ein (E)EPROM usw. Alternativ können der erste Datenspeicher und der zweite Datenspeicher der gleiche Speicher sein.

Es ist eine Weiterbildung, dass die Garmesswerte zeitlich diskret ermittelt oder erfasst werden, insbesondere periodisch bzw. mit einem gleichbleibenden zeitlichen Abstand. Beispielsweise können die Garmesswerte jede Sekunde ermittelt werden. Die Garmesswerte können in roher Form (z.B. als Werte eines von dem Sensor direkt ausgegebenen Spannungspegels) oder als weiterverarbeitete Werte (z.B. umgerechnet in eine Konzentration, eine Feuchte, eine Temperatur) usw. vorliegen.

Unter einer Messkurve kann insbesondere eine zeitliche Auftragung der ermittelten Garmesswerte verstanden werden. Die zum Vergleich mit den Referenzen verwendete Messkurve kann eine feste Zahl von Messpunkten aufweisen, z.B. die letzten k Messpunkte. Wird ein neuer Messpunkt k+1 aufgenommen, fällt der älteste Messpunkt k = 1 weg. Alternativ kann die Messkurve alle ab einem bestimmten Zeitpunkt gemessenen Messpunkte aufweisen, so dass dann die Messkurve mit der Zeit immer mehr Messpunkte aufweist. Die Messpunkte können gemittelte Messpunkte usw. sein.

Die Datenverarbeitungseinrichtung kann beispielsweise ein integrierter Schaltkreis wie ein Mikrocontroller, ein ASIC, ein FPGA usw. sein oder einen solchen integrierten Schaltkreis aufweisen. Die Datenverarbeitungseinrichtung kann eine Steuereinrichtung des Haushaltsgargeräts sein, z.B. eine Herdelektronik. Die Datenspeicher können Bauelemente der Datenverarbeitungseinrichtung sein.

Unter einem reduzierten Satz von Koeffizienten wird in Satz von Koeffizienten verstanden, der sich aus einer diskreten Transformation einer jeweiligen ursprünglichen Kurve ergibt und der weniger Koeffizienten aufweist als ein voller Satz von Koeffizienten. Würde sich also aus einer diskreten Transformation einer ursprünglichen Kurve eine volle Zahl von Koeffizienten ergeben (z.B. entsprechend einer Zahl der Punkte der ursprünglichen Kurve), weist der reduzierte Satz nur weniger Koeffizienten auf. Folglich ist bei dem reduzierten Satz mindestens ein Koeffizient der grundsätzlich bestimmbaren Koeffizienten nicht berücksichtigt worden bzw. nicht vorhanden. Dies kann beispielsweise dadurch erreicht werden, dass fehlende Koeffizienten berechnet, aber nicht gespeichert oder auf Null gesetzt werden. Alternativ brauchen fehlende Koeffizienten gar nicht erst berechnet werden. Bei der Speicherung und damit auch Nutzung des reduzierten Koeffizientensatzes wird ausgenutzt, dass einige Koeffizienten zur Beschreibung der zugrundeliegenden Referenzkurve weniger beitragen als andere Koeffizienten (beispielsweise weil sie mit einer nur kleinen Amplitude verknüpft sind) und deren Fehlen somit einen nur geringen Fehler bei der Beschreibung der Referenzkurve erzeugt. Das Fehlen der Koeffizienten ergibt jedoch einen merklich geringeren Berechnungsaufwand.

Es ist eine Weiterbildung, dass nicht mehr als 50 % der Koeffizienten einer vollen Transformation benutzt werden. So lässt sich eine im Vergleich zu der Datenmenge der ursprünglichen Kurve oder der vollen Transformation große Datenmenge einsparen. Es ist eine zum gleichen Zweck besonders vorteilhafte Weiterbildung, dass nicht mehr als 33 %, insbesondere nicht mehr als 25 %, insbesondere nicht mehr als 10 %, insbesondere nicht mehr als 5 %, der Koeffizienten einer vollen Transformation benutzt werden.

Als Referenzkurve kann beispielsweise eine zuvor experimentell bestimmte Kurve, eine aus mehreren einzelnen Kurven gemittelte Kurve oder eine numerisch berechnete Kurve sein.

Es ist eine Weiterbildung, dass die diskrete Transformation eine reellwertige, lineare und orthogonale Transformation ist, insbesondere eine eindimensionale Transformation.

Es ist eine Ausgestaltung, dass die diskrete Transformation eine diskrete Fouriertransformation ist. Eine solche Transformation ist besonders effizient durchführbar. Alternativ können z.B. auch eine Bluestein-FFT-Transformation bzw. ein Bluestein-FFT-Algorithmus, eine diskrete Hartley-Transformation (DHT), eine Hadamard-Transformation, eine schnelle Wavelet-Transformation (z.B. eine Wavelet-Paket-Transformation) oder eine Z-Transformation verwendet werden.

Es ist noch eine Ausgestaltung, dass die diskrete Fouriertransformation eine diskrete Kosinus-Transformation (DCT) ist. Diese weist den besonderen Vorteil auf, dass der Einfluss der Koeffizienten mit ihrer Ordnung abnimmt und sich folglich die p gespeicherten Koeffizienten sukzessiv berechnen lassen, beispielsweise mittels einer geeigneten Rekursionsformel. Dies lässt sich rechnerisch besonders einfach umsetzen, da der p+1-ste Koeffizient usw. nicht mehr berechnet zu werden braucht.

Die DCT kann wie folgt dargestellt sein:

Gegeben seien N diskrete reell-wertige Messwerte x[i] einer Kurve mit i = 0 bis N - 1. Die zugehörigen N reell-wertigen Koeffizienten C[k] der DCT mit k = 0 bis N - 1 lassen sich berechnen zu:

$$C[k] = A(k) \cdot \sqrt{2/N} \cdot \sum_{i=0}^{N=1} x[i] \cdot cos\left[(2 \cdot i + 1) \cdot \frac{k \cdot \pi}{2 \cdot N}\right]$$

mit $A[k] = 1/\sqrt{2}$ für k = 0 und A[k] = 1 für k ≠ 0. Es können aber auch noch andere Normierungsfaktoren anstelle von $\sqrt{2/N}$ verwendet werden.

Es ist eine Weiterbildung, dass ein Offset der Kurve (d.h., eine Verschiebung der Kurve parallel zur y-Achse) nicht berücksichtigt wird. Dann braucht der nullte Koeffizient C[0] vorteilhafterweise nicht berechnet zu werden. Es ist noch eine Weiterbildung, dass der Normierungs-Faktor auf 1 gesetzt wird. Dann können die DCT-Koeffizienten vereinfacht gemäß

$$C[k] = \sum_{i=0}^{N=1} x[i] \cdot cos\left[(2 \cdot i + 1) \cdot \frac{k \cdot \pi}{2 \cdot N}\right]$$

berechnet werden. Das bedeutet eine Multiplikation der Messwerte x[i] mit einem Kosinus-Wert und eine Summation dieser Produkte, also eine Durchführung von rechnerisch sehr einfachen Schritten.

Die obigen Kosinus-Werte brauchen nicht bei jeder DCT neu berechnet werden, sondern sind in einer Weiterbildung gespeichert, z.B. in einer Nachschlagetabelle ("Lookup-Table") abgelegt. Wegen der Periodizität der Kosinus-Funktion (Periodenlänge: $2\pi$) kann eine Größe der Nachschlagetabelle auf 4·N Einträge begrenzt werden, da

$$cos\ (x) = cos\ (x + p \cdot 2\pi),\ mit\ p = 0, 1, 2, ...$$

gilt. Folglich können die DCT-Koeffizienten nun gemäß

$$C[k] = \sum_{i=0}^{N=1} x[i] \cdot CosTable\left[\left((2 \cdot i + 1) \cdot k\right) mod\ (4 \cdot N)\right]$$

mit k = 1 bis N - 1 berechnet werden. Dabei stellt "mod" den Modulo-Operator dar. Die Nachschlagetabelle CosTable [.] enthält die Werte bzw. Einträge CosTable [i] gemäß

$$\text{CosTable [i]} = \cos [(i \cdot \pi / (2 \cdot N)]$$

mit i = 0 bis 4·N - 1.

Die Nachschlagetabelle braucht aber nicht dadurch erzeugt zu werden, dass in einer Schleife zeitaufwändig alle Kosinus-Werte einzeln berechnet werden. Es ist vielmehr eine rechnerisch besonders vorteilhafte Weiterbildung, dass diese inkrementell berechnet werden. Hierbei werden die trigonomischen Additions-Theoreme für Sinus und Kosinus:

$$\cos (x + dy) = \cos (x) \cdot \cos (dy) - \sin (x) \cdot \sin (dy)$$

$$\sin (x + dy) = \sin (x) \cdot \cos (dy) + \cos (x) \cdot \sin (dy)$$

ausgenutzt. Soll beispielsweise eine Kosinus-Tabelle für $\cos ({}^{i \cdot \pi}/_N)$ mit i = 0 bis N - 1, berechnet werden, so lassen sichdie Tabellenwerte c [i] gemäß

$$c [i] = \cos (i \cdot \pi / N) = c_{i-1} \cdot \Delta c - s_{i-1} \cdot \Delta s;$$

$$s_i = \cos (i \cdot \pi / N) = s_{i-1} \cdot \Delta c - c_{i-1} \cdot \Delta s$$

mit

$$\Delta c = \cos (\pi / N) \text{ und } \Delta s = \sin (\pi / N)$$

berechnen. Es brauchen also die zwei trigonomischen Funktionswerte $\Delta c$ und $\Delta s$ nur einmal berechnet zu werden, und die anderen Kosinus-Werte bzw. Sinus-Werte ergeben sich iterativ aus den Additionstheoremen. Pro Tabelleneintrag der Kosinus-Tabelle werden folglich nur zwei Additionen und vier Multiplikationen benötigt.

Es hat sich gezeigt, dass der Aufbau der Nachschlagetabelle mit dieser inkrementellen Methode ungefähr fünfmal schneller ist als eine direkte Berechnung der Kosinus-Werte.

Anhand eines Beispiels für eine Diskrete Kosinus-Transformation (DCT) wird nun aufgezeigt, wie diese für eine Datenkompression in dem Haushalts-Gargerät verwenden kann. Dazu zeigt die folgende Tab.1 m = 32 Messwerte MW einer Messkurve MK (Spalte A):

| A | B | C | D | E | F | G |
|---|---|---|---|---|---|---|
| MW (32) | DCT-Koeff. (32) | IDCT (32) | DCT-Koeff. (7) | IDCT (7) | DCT-Koeff. (4) | IDCT (4) |
| 3253 | 18288 079 | 3253 | 18288,079 | 3251,967 | 18288,079 | 3250,995 |
| 3250 | 61,209 | 3250 | 61,209 | 3251,305 | 61,209 | 3250,632 |
| 3250 | 2,187 | 3250 | 2,187 | 3250,093 | 2,187 | 3249,926 |
| 3250 | 9,143 | 3250 | 9,143 | 3248,521 | 9,143 | 3248,912 |
| 3246 | -0,567 | 3246 | -0,567 | 3246,812 | 0 | 3247,641 |
| 3244 | 2,228 | 3244 | 2,228 | 3245,159 | 0 | 3246,177 |
| 3244 | 2,383 | 3244 | 2,383 | 3243,687 | 0 | 3244,586 |
| 3242 | 0,383 | 3242 | 0 | 3242,425 | 0 | 3242,936 |

(fortgesetzt)

| A | B | C | D | E | F | G |
|---|---|---|---|---|---|---|
| MW (32) | DCT-Koeff. (32) | IDCT (32) | DCT-Koeff. (7) | IDCT (7) | DCT-Koeff. (4) | IDCT (4) |
| 3242 | 1,458 | 3242 | 0 | 3241,319 | 0 | 3241,293 |
| 3243 | -0,388 | 3243 | 0 | 3240,262 | 0 | 3239,711 |
| 3237 | -0,064 | 3237 | 0 | 3239,142 | 0 | 3238,232 |
| 3237 | -1,569 | 3237 | 0 | 3237,885 | 0 | 3236,885 |
| 3237 | -1,981 | 3237 | 0 | 3236,482 | 0 | 3235,678 |
| 3234 | 2,701 | 3234 | 0 | 3234,994 | 0 | 3234,607 |
| 3234 | 0,010 | 3234 | 0 | 3233,529 | 0 | 3233,651 |
| 3234 | -0,508 | 3234 | 0 | 3232,204 | 0 | 3232,778 |
| 3230 | 3,005 | 3230 | 0 | 3231,102 | 0 | 3231,947 |
| 3230 | -0,791 | 3230 | 0 | 3230,245 | 0 | 3231,115 |
| 3229 | -0,482 | 3229 | 0 | 3229,579 | 0 | 3230,241 |
| 3230 | 1,595 | 3230 | 0 | 3228,991 | 0 | 3229 ,289 |
| 3230 | 0,979 | 3230 | 0 | 3228,340 | 0 | 3228 ,234 |
| 3225 | 3,038 | 3225 | 0 | 3227,498 | 0 | 3227,065 |
| 3225 | 1,324 | 3225 | 0 | 3226,390 | 0 | 3225,784 |
| 3226 | -1,334 | 3226 | 0 | 3225,011 | 0 | 3224,412 |
| 3226 | -1,561 | 3226 | 0 | 3223,427 | 0 | 3222,983 |
| 3221 | -0,063 | 3221 | 0 | 3221,758 | 0 | 3221,544 |
| 3219 | 1,236 | 3219 | 0 | 3220,140 | 0 | 3220,151 |
| 3219 | -0,843 | 3219 | 0 | 3218,699 | 0 | 3218,865 |
| 3217 | 0,819 | 3217 | 0 | 3217,519 | 0 | 3217,746 |
| 3217 | 0,244 | 3217 | 0 | 3216,643 | 0 | 3216,851 |
| 3216 | -0,876 | 3216 | 0 | 3216,074 | 0 | 3216,226 |
| 3216 | -0,390 | 3216 | 0 | 3215,796 | 0 | 3215,905 |

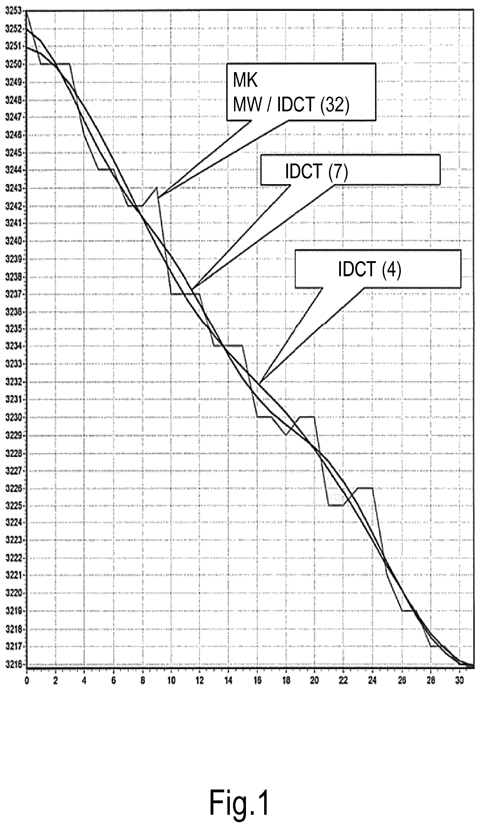

In Spalte B sind die zugehörigen vollständigen 32 Koeffizienten der Diskreten Kosinus-Transformation angegeben. Aus den Koeffizienten der Diskreten Kosinus-Transformation lässt sich die ursprüngliche Messkurve wieder eindeutig und verlustfrei durch eine Rücktransformation ermitteln. Das Ergebnis der Rücktransformation (Inverse Diskrete Kosinus-Transformation; IDCT) steht in Spalte C. Spalte C entspricht den ursprünglichen Messwerten von Spalte A. Werden nicht alle Koeffizienten verwendet, kommt die Glättungs-Eigenschaft zum Tragen: In Spalte D wurden nur die ersten sieben Koeffizienten der DCT belassen, alle anderen wurden auf Null gesetzt. Das Ergebnis der Rücktransformation dieser sieben Koeffizienten steht in Spalte E. Der ursprüngliche Kurvenverlauf wird gut angenähert, jedoch sind dadurch Rausch-Anteile entfernt worden. In Spalte F wurden nur die ersten vier Koeffizienten der DCT belassen. Das Ergebnis der Rücktransformation dieser sieben Koeffizienten findet sich in Spalte G. Auch dieser Kurvenverlauf gibt den Verlauf der ursprünglichen Kurve noch gut wieder. Die Kurvenverläufe der Messwerte MW aus Spalte A, der Rücktransformation mit sieben DCT-Koeffizienten aus Spalte E und der Rücktransformation mit vier DCT-Koeffizienten aus Spalte G ist weiter unten in Fig.1 gezeigt.

Alternativ zu der Diskreten Kosinus-Transformation (DCT) können z.B. auch eine modifizierte Diskrete Kosinus-Transformation (MDCT), eine diskrete Sinustransformation (DST), eine Fouriertransformation für zeitdiskrete Signale oder eine schnelle FourierTransformation (FFT) usw. verwendet werden.

Ferner ist die Datenverarbeitungseinrichtung dazu eingerichtet, die Koeffizienten einer diskreten Transformation der Messkurve mit den abgespeicherten Koeffizienten der jeweiligen Referenzkurven zu vergleichen. Dies ermöglicht eine numerisch besonders günstige Möglichkeit eines Vergleichs von Messwerten und Referenzwerten. Bei dieser Ausgestaltung wird die Messkurve mittels der Datenverarbeitungseinrichtung einer diskreten Transformation unterzogen bzw. eine diskrete Transformation auf die Messkurve angewandt. Dabei brauchen auch aus der Messkurve nicht alle möglichen Koeffizienten berechnet zu werden, sondern nur so viele, wie für den Vergleich benötigt werden. Der Vergleich kann mit der vollen Zahl der in dem zweiten Datenspeicher gespeicherten Koeffizienten durchgeführt werden, oder mit einer kleineren Zahl bzw. einer Teilmenge davon. Bei dem Vergleich werden insbesondere eine gleiche Zahl von Koeffizienten der Messkurve und Koeffizienten einer jeweiligen Referenzkurve miteinander verglichen.

In einer Weiterbildung sind - anschließend z.B. an das oben in Bezug auf Tab.1 beschriebene Beispiel - in dem zweiten Datenspeicher ausgewählte niedrige DCT-Koeffizienten der Referenzkurven gespeichert, beispielsweise vier, sieben oder zehn Koeffizienten pro Referenzkurve. Die Datenverarbeitungseinrichtung (z.B. eine zentrale Steuereinrichtung oder "Herdelektronik") kann in regelmäßigen Zeitabständen (beispielsweise alle fünf Sekunden) eine DCT der Messkurve bzw. des gemessenen Signalverlaufs durchführen. Ein Zeitabstand zwischen zwei zeitlich benachbarten Messwerten beträgt dabei vorteilhafterweise nicht mehr als fünf Sekunden, z.B. fünf Sekunden, eine Sekunde, 0,5 Sekunden usw. Die Datenverarbeitungseinrichtung ermittelt bei der DCT auch nur die niedrigen (beispielsweise vier, sieben oder zehn) DCT-Koeffizienten.

Es ist eine Weiterbildung, dass der Vergleich mittels der Methode der Summe der absoluten Abweichungen durchgeführt wird. Diese ist rechnerisch besonders günstig. Alternativ kann z.B. die Methode der kleinsten Quadrate zum Vergleich verwendet werden.

Mittels der Methode der Summe der absoluten Abweichungen kann diejenige Referenzkurve ermittelt werden, die am besten mit der Messkurve übereinstimmt. Dabei kann die Datenverarbeitungseinrichtung in einer Weiterbildung für jede Referenzkurve die Summe der Abweichungen ihrer DCT-Koeffizienten von den entsprechenden DCT-Koeffizienten der Messkurve ermitteln. Die Datenverarbeitungseinrichtung bildet also z.B. für jede Referenzkurve k eine Summe SAA (k) absoluter Abweichungen:

$$SAA\,(k) = \sum_{i=1}^{N} |Cakt(i) - Ck(i)|$$

Das Symbol "|.|" bezeichnet dabei einen Betrag mit $|x| = x$ für $x \geq 0$; -x sonst. Cakt (i) ist der i-te DCT-Koeffizient der aktuellen Messkurve, Ck (i) ist der i-te DCT-Koeffizient der k-ten Referenzkurve. N ist der größte Index der DCT-Koeffizienten, beispielsweise 10. Die Datenverarbeitungseinrichtung sucht nach dem kleinsten Wert von SAA (k), nämlich SAA (kbest) mit SAA (kbest) = Min {SAA(1), SAA(2), ..., SAA(N)}. Die Referenz-Kurve mit k = kbest passt am besten zu der Messkurve bzw. zum aktuellen Signalverlauf.

Es ist eine Weiterbildung, dass der ermittelte Wert von SAA (kbest) dazu verwendbar ist, um zu beurteilen, ob die gefundene Referenzkurve mit k = kbest ausreichend genau mit der aktuellen Messkurve übereinstimmt. Beispielsweise mag eine Referenzkurve nur dann zur Steuerung des Haushaltsgeräts, insbesondere des Garablaufs, verwendet werden, wenn der ermittelte Wert von SAA (kbest) kleiner ist als ein vorgegebener Schwellwert. Dadurch kann auch der Fall berücksichtigt werden, dass keine der Referenzkurven zu der Messkurve passt.

Als ein Ergebnis des Vergleichs ist diejenige Referenzkurve identifizierbar ist, deren Abweichung zu der Messkurve am geringsten ist bzw. die am besten mit der Messkurve übereinstimmt.

Es ist eine weitere Ausgestaltung, dass die Datenverarbeitungseinrichtung dazu eingerichtet ist, die Messkurve mit jeweiligen aus den zugehörigen Koeffizienten rücktransformierten Referenzkurven zu vergleichen. Dabei brauchen die Transformationskoeffizienten der Messkurve nicht berechnet zu werden. Vielmehr werden aus den Koeffizienten der reduzierten Sätze der Referenzkurven wieder Referenzkurven rücktransformiert, und diese rücktransformierten Referenzkurven werden mit der Messkurve verglichen. Obwohl nur ein reduzierter Satz von Koeffizienten in dem zweiten Datenspeicher abgespeichert ist, kann eine rücktransformierte Referenzkurve für den Vergleich zur Verfügung gestellt werden, die sich nur wenig von der ursprünglichen Referenzkurve unterscheidet.

Auch hierbei kann der Vergleich mittels der Methode der Summe der absoluten Abweichungen durchgeführt werden, z.B. mittels der Methode der kleinsten Quadrate.

Es ist auch eine Weiterbildung, dass aus der Identifizierung der am besten übereinstimmenden Referenzkurve mindestens ein Garparameter ableitbar ist, mittels dessen ein laufender Garprozess steuerbar ist. Mögliche Garparameter umfassen ein Garzeitende, eine Restgardauer, einen Zeitpunkt für einen Übergang zwischen unterschiedlichen Phasen eines Garprozesses usw. Das Garzeitende und die Restgardauer sind insbesondere dann einfach bestimmbar, wenn zusätzlich zu den Koeffizienten der Referenzkurven eine jeweilige Gardauer gespeichert ist, z.B. in der zweiten Datenbank.

Es ist noch eine weitere Ausgestaltung, dass der Garsensor ein Temperatursensor ist. Der Temperatursensor kann ein Garraumsensor sein, d.h., ein Sensor, der eine Garraumtemperatur in einem Garraum (z.B. in einem Ofenraum) abfühlt. Das Haushalts-Gargerät kann dann ein Ofen oder eine Ofen/Kochfeld-Kombination bzw. Herd sein. Alternativ oder zusätzlich kann der Temperatursensor ein Kerntemperaturfühler sein. Alternativ oder zusätzlich kann der Temperatursensor ein "Topfsensor" sein, z.B. ein IR-Sensor, der eine Temperatur an einer Außenseite eines Gargeschirrs oder eine Temperatur eines in einem Gargeschirr vorhandenen Garguts oder Speise abfühlt.

Es ist auch eine Ausgestaltung, dass das Haushalts-Gargerät (z.B. ein Ofen oder ein Herd) einen Garraum aufweist und der Garsensor ein Sensor zum Bestimmen einer Gaskonzentration in dem Garraum ist. Dadurch kann ein Garzeitende besonders genau bestimmt werden. Der Garsensor kann insbesondere ein Sauerstoffsensor sein. Zusätzlich oder alternativ kann mindestens ein Gassensor aber auch auf andere Gase empfindlich reagieren, z.B. auf Kohlendioxid oder bestimmte Bräunungsgase (d.h., Gase, die bei einer Bräunung eines Garguts auftreten).

Es ist auch noch eine Ausgestaltung, dass das Haushalts-Gargerät einen Garraum aufweist und der Garsensor ein Feuchtesensor ist. Auch dieser eignet sich besonders zur Bestimmung eines Garzeitendes oder einer Restgarzeit.

Es ist außerdem eine Ausgestaltung, dass die Datenverarbeitungseinrichtung dazu eingerichtet ist, als Ergebnis des Vergleichs mindestens eine Aktion auszulösen. Die Aktion kann ein Anzeigen oder Aktualisieren eines Garzeitendes oder einer Restgarzeit, ein Ausgeben eines optischen und/oder akustischen Signals mit Erreichen des Garzeitendes, ein Ausgeben eines Signals zum Beenden eines Garvorgangs mit Erreichen des Garzeitendes, ein Ausgeben eines Signals zum Aktivieren eines Nachlaufbetriebs mit Erreichen des Garzeitendes usw. sein oder umfassen.

Die Aufgabe wird auch gelöst durch ein Verfahren zum Betreiben eines zuvor beschriebenen Haushalts-Gargeräts.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.

Fig.1   zeigt in einer Auftragung von Messwerten einer Messkurve über die Zeit und zwei zugehörige Rücktransformationen aus reduzierten Sätzen von DCT-Koeffizienten; und

Fig.2   zeigt eine Skizze eines Haushalts-Gargeräts mit einer Datenverarbeitungseinrichtung.

Fig.1 zeigt die Kurvenverläufe der in Tab.1 aufgeführten Messkurve MK der Messwerte MW (Tab.1, Spalte A), der Rücktransformation IDCT (7) mit sieben DCT-Koeffizienten (Tab.1, Spalte E) und der Rücktransformation IDCT (4) mit vier DCT-Koeffizienten (Tab.1, Spalte G). Der Kurvenlauf der Rücktransformation IDCT (32) mit allen möglichen 32 DCT-Koeffizienten entspricht dem Verlauf der Messkurve MK. Je weniger DCT-Koeffizienten zur Rücktransformation verwendet werden, desto stärker ist die Kurve geglättet. Die Rücktransformationen IDCT (4) und IDCT (7) sind gute Näherungen an die Messkurve MW. Die Glättung kann sogar vorteilhaft zum Vergleich mit ggf. geglätteten oder gemittelten Referenzkurven sein.

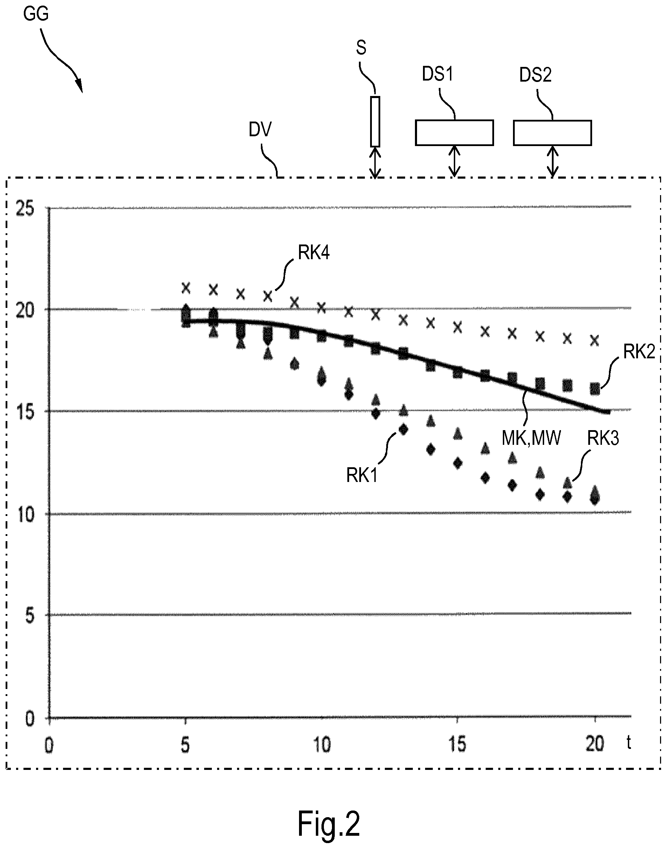

Fig.2 zeigt eine Skizze eines Haushalts-Gargeräts GG (z.B. eines Backofens oder eines Herds) mit einer Datenverarbeitungseinrichtung DV (z.B. einer Herdelektronik), einem Garsensor S, einem ersten, flüchtigen Datenspeicher DS1 (z.B. einem RAM) und einem zweiten, flüchtigen Datenspeicher DS2 (z.B. einem EEPROM). Die beiden Datenspeicher DS1 und DS2 sind mit der Datenverarbeitungseinrichtung DV gekoppelt und können Bauteile der Datenverarbeitungseinrichtung DV sein. Der Garsensor S kann ein Sauerstoffsensor sein, der zum Bestimmen einer Gaskonzentration in einem Garraum (o. Abb.) des Haushalts-Gargeräts GG eingerichtet und angeordnet ist. In dem ersten Datenspeicher DS1 können mittels des Gassensors S ermittelte Messwerte MW gespeichert werden, während in dem zweiten Datenspeicher DS2 reduzierte Sätze von DCT-Koeffizienten von zuvor bestimmten Referenzkurven RK1 bis RK4 gespeichert sind, z.B. in Form einer Nachschlagtabelle.

Eine Auftragung von Messwerten MW über die Zeit t in Minuten ist symbolisch in der Datenverarbeitungseinrichtung DV anhand mehrerer Referenzkurven RK1 bis RK4 und einer Messkurve MK gezeigt. Die Messkurve MK zeigt eine beste Übereinstimmung mit der Referenzkurve RK2, d.h., dass k = 2 = kbest gilt. Um einen Grad einer Übereinstimmung der Messkurve MK mit einer der Referenzkurven RK1 bis RK4 festzustellen, kann die Datenverarbeitungseinrichtung DV dazu eingerichtet sein, einen reduzierten Satz von DCT-Koeffizienten einer Diskreten Kosinus-Transformation der Messkurve (MK) mit den entsprechenden Koeffizienten der jeweiligen Referenzkurven RK1 bis RK4 zu vergleichen. Dies kann z.B. mittels der Methode der Summe absoluter Abweichungen geschehen.

Alternativ kann die Messkurve MK mit den Referenzkurven RK1 bis RK4 dadurch verglichen werden, dass sie mit den Rücktransformationen IDCT (siehe Abb.1) der DCT-Koeffizienten der jeweiligen Referenzkurven RK1 bis RK4 bzw. den rücktransformierten Referenzkurven verglichen wird. Auch dies kann mittels der Methode der Summe absoluter Abweichungen geschehen.

Nachdem die beste Referenzkurve RK2 ermittelt worden ist, kann die Datenverarbeitungseinrichtung DV unter deren Kenntnis mindestens eine Aktion auslösen, z.B. eine Restgardauer anzeigen und/oder mit Erreichen eines Garzeitendes einen Heizbetrieb abschalten oder deaktivieren.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

**Bezugszeichenliste**

| | |
|---|---|
| IDCT | DCT-Rücktransformation |
| DS1 | Erster Datenspeicher |
| DS2 | Zweiter Datenspeicher |
| DV | Datenverarbeitungseinrichtung |
| GG | Gargerät |
| MK | Messkurve |
| MW | Messwert |
| RKi | i-te Referenzkurve |
| S | Garsensor |

**Patentansprüche**

1. Haushalts-Gargerät (GG), aufweisend

   - mindestens einen Garsensor (S) zur zeitlich diskreten Aufnahme von Garmesswerten (MW),
   - einen ersten Datenspeicher (DS1), wobei das Haushalts-Gargerät (GG) dazu eingerichtet ist, die von dem mindestens einen Garsensor (S) aufgenommenen Garmesswerte (MW) als mindestens eine Messkurve (MK), die einer zeitlichen Auftragung der ermittelten Garmesswerte (MW) entspricht, zu speichern,
   - einen zweiten Datenspeicher (DS2), in dem mehrere Referenzen gespeichert sind, und
   - eine Datenverarbeitungseinrichtung (DV), die dazu eingerichtet ist, zum Vergleich mindestens eine aufgenommene Messkurve (MK) mit den zugehörigen Referenzen zu vergleichen, und
   - die Datenverarbeitungseinrichtung (DV) dazu eingerichtet ist, als Ergebnis des Vergleichs mindestens eine Aktion des Haushalts-Gargeräts (GG) auszulösen,

   **dadurch gekennzeichnet, dass**

   - die Referenzen reduzierte Sätze von Koeffizienten einer diskreten Transformation einer jeweiligen Referenzkurve (RK1-RK4) sind und
   die Datenverarbeitungseinrichtung (DV) dazu eingerichtet ist,
   - Koeffizienten einer diskreten Transformation der Messkurve (MK) mit einer gleichen Zahl von Koeffizienten der jeweiligen Referenzkurven (RK1-RK4) zu vergleichen,
   - daraus diejenige Referenzkurve (RK2) zu identifizieren, deren Abweichung zu der Messkurve (MK) am geringsten ist, und
   - unter Kenntnis der identifizierten Referenzkurve (RK2) die mindestens eine Aktion auszulösen.

2. Haushalts-Gargerät (GG) nach Anspruch 1, **dadurch gekennzeichnet, dass** die Datenverarbeitungseinrichtung (DV) dazu eingerichtet ist, die Abweichung mittels der Methode der Summe der absoluten Abweichungen durchzuführen.

3. Haushalts-Gargerät (GG) nach einem der vorhergehenden Ansprüche, **dadurch gekennzeichnet, dass** die Datenverarbeitungseinrichtung (DV) dazu eingerichtet ist, aus identifizierten Referenzkurve (RK2) mindestens einen Garparameter abzuleiten und diesen mindestens einen Garparameter zum Steuern eines laufenden Garprozesses zu verwenden.

4. Haushalts-Gargerät (GG) nach Anspruch 3, **dadurch gekennzeichnet, dass** die Datenverarbeitungseinrichtung (DV) dazu eingerichtet ist, aus identifizierten Referenzkurve (RK2) nur dann mindestens einen Garparameter abzuleiten und diesen mindestens einen Garparameter zum Steuern eines laufenden Garprozesses zu verwenden, wenn die Abweichung für die identifizierte Referenzkurve (RK2) kleiner ist als ein vorgegebener Schwellwert.

5.  Haushalts-Gargerät (GG) nach einem der vorhergehenden Ansprüche, **dadurch gekennzeichnet, dass** für jede Referenzkurve (RK1-RK4) zusätzlich zu den Koeffizienten eine jeweilige Gardauer gespeichert ist.

6.  Haushalts-Gargerät (GG) nach einem der vorhergehenden Ansprüche, **dadurch gekennzeichnet, dass** die Datenverarbeitungseinrichtung (DV) dazu eingerichtet ist, nicht mehr als 50 % der Koeffizienten einer vollen Transformation zu benutzen.

7.  Haushalts-Gargerät (GG) nach einem der vorhergehenden Ansprüche, **dadurch gekennzeichnet, dass** die Datenverarbeitungseinrichtung (DV) dazu eingerichtet ist, ein Offset der Messkurve (MK) und der jeweiligen Referenzkurven (RK1-RK4) nicht zu berücksichtigen.

8.  Haushalts-Gargerät (GG) nach einem der vorhergehenden Ansprüche, **dadurch gekennzeichnet, dass** die diskrete Transformation eine diskrete Fouriertransformation ist.

9.  Haushalts-Gargerät (GG) nach Anspruch 8, **dadurch gekennzeichnet, dass** die diskrete Fouriertransformation eine Diskrete Kosinus-Transformation ist.

10. Haushalts-Gargerät (GG) nach Anspruch 9, **dadurch gekennzeichnet, dass** die Datenverarbeitungseinrichtung (DV) dazu eingerichtet ist, zur Durchführung der diskreten Kosinus-Transformation in einer Nachschlagetabelle abgelegte, inkrementell berechnete Kosinus-Werte zu verwenden.

11. Haushalts-Gargerät (GG) nach einem der vorhergehenden Ansprüche, **dadurch gekennzeichnet, dass** der Garsensor (S) ein Temperatursensor ist.

12. Haushalts-Gargerät (GG) nach einem der vorhergehenden Ansprüche, **dadurch gekennzeichnet, dass** das Haushalts-Gargerät (GG) einen Garraum aufweist und der Garsensor (S) ein Sensor zum Bestimmen einer Gaskonzentration in dem Garraum, insbesondere ein Sauerstoffsensor, ist.

13. Verfahren zum Betreiben eines Haushalts-Gargeräts (GG) nach einem der vorhergehenden Ansprüche, bei dem

    - mittels eines Garsensors (S) des Haushalts-Gargeräts (GG) Garmesswerte (MW) zeitlich diskret aufgenommen werden,
    - die Garmesswerte (MW) in Form mindestens einer Messkurve (MK), die einer zeitlichen Auftragung der ermittelten Garmesswerte (MW) entspricht, gespeichert werden,
    - eine aufgenommene Messkurve (MK) mit mehreren Referenzen verglichen wird, wobei die Referenzen als reduzierte Sätze von Koeffizienten einer diskreten Transformation einer jeweiligen Referenzkurve (RK1-RK4) in dem Haushalts-Gargerät (GG) gespeichert sind, indem
    - Koeffizienten einer diskreten Transformation der Messkurve (MK) mit einer gleichen Zahl von Koeffizienten der jeweiligen Referenzkurven (RK1-RK4) verglichen werden und
    - daraus diejenige Referenzkurve (RK2) identifiziert wird, deren Abweichung zu der Messkurve (MK) am geringsten ist, und
    - als Ergebnis des Vergleichs unter Kenntnis der identifizierten Referenzkurve (RK2) mindestens eine Aktion ausgelöst wird.

14. Verfahren nach Anspruch 13, bei dem das Vergleichen mittels der Methode der Summe absoluter Abweichungen durchgeführt wird.


**Claims**

1.  Household cooking device (GG), having

    - at least one cooking sensor (S) for temporally discrete recording of cooking measurement values (MW),
    - a first data memory (DS1), wherein the household cooking device (GG) is designed to store the cooking measurement values (MW) recorded by the at least one cooking sensor (S) as at least one measurement curve (MK) which corresponds to a temporal plotting of the determined cooking measurement values (MW),
    - a second data memory (DS2) in which several references are stored, and
    - a data processing device (DV) which is designed to compare at least one recorded measurement curve (MK) with the associated references, and
- the data processing device (DV) is designed to trigger at least one action of the household cooking device (GG) as a result of the comparison,

**characterised in that**

- the references are reduced sets of coefficients of a discrete transform of a respective reference curve (RK1-RK4) and
the data processing device (DV) is designed to
- compare coefficients of a discrete transform of the measurement curve (MK) with an identical number of coefficients of the respective reference curves (RK1-RK4),
- identify therefrom the reference curve (RK2) with the smallest deviation from the measurement curve (MK), and
- knowing the identified reference curve (RK2), to trigger the at least one action.

2. Household cooking device (GG) according to claim 1, **characterised in that** the data processing device (DV) is designed to carry out the deviation using the method of the sum of absolute deviations.

3. Household cooking device (GG) according to one of the preceding claims, **characterised in that** the data processing device (DV) is designed to derive at least one cooking parameter from an identified reference curve (RK2) and to use this at least one cooking parameter to control a running cooking process.

4. Household cooking device (GG) according to claim 3, **characterised in that** the data processing device (DV) is designed to derive at least one cooking parameter from an identified reference curve (RK2) and to use this at least one cooking parameter to control a running cooking process only if the deviation for the identified reference curve (RK2) is smaller than a predefined threshold value.

5. Household cooking device (GG) according to one of the preceding claims, **characterised in that** a respective cooking duration is stored for each reference curve (RK1-RK4) in addition to the coefficients.

6. Household cooking device (GG) according to one of the preceding claims, **characterised in that** the data processing device (DV) is designed to use not more than 50% of the coefficients of a full transform.

7. Household cooking device (GG) according to one of the preceding claims, **characterised in that** the data processing device (DV) is designed not to take account of an offset of the measurement curve (MK) and of the respective reference curves (RK1-RK4).

8. Household cooking device (GG) according to one of the preceding claims, **characterised in that** the discrete transform is a discrete Fourier transform.

9. Household cooking device (GG) according to claim 8, **characterised in that** the discrete Fourier transform is a discrete cosine transform.

10. Household cooking device (GG) according to claim 9, **characterised in that** the data processing device (DV) is designed to use incrementally calculated cosine values stored in a look-up table to carry out the discrete cosine transform.

11. Household cooking device (GG) according to one of the preceding claims, **characterised in that** the cooking sensor (S) is a temperature sensor.

12. Household cooking device (GG) according to one of the preceding claims, **characterised in that** the household cooking device (GG) has a cooking compartment and the cooking sensor (S) is a sensor for determining a gas concentration in the cooking compartment, in particular an oxygen sensor.

13. Method for operating a household cooking device (GG) according to one of the preceding claims, in which

- cooking measurement values (MW) are recorded in a temporally discrete manner using a cooking sensor (S) of the household cooking device (GG),
- the cooking measurement values (MW) are stored in the form of at least one measurement curve (MK) which corresponds to a temporal plotting of the determined cooking measurement values (MW),
- a recorded measurement curve (MK) is compared with several references, wherein the references are stored in the household cooking device (GG) as reduced sets of coefficients of a discrete transform of a respective reference curve (RK1-RK4), in that
- coefficients of a discrete transform of the measurement curve (MK) are compared with an identical number of coefficients of the respective reference curves (RK1-RK4) and
- the reference curve (RK2) with the smallest deviation from the measurement curve (MK) is identified therefrom, and
- as a result of the comparison and knowing the identified reference curve (RK2), at least one action is triggered.

**14.** Method according to claim 13, in which the comparison is carried out using the method of the sum of absolute deviations.

**Revendications**

**1.** Appareil de cuisson ménager (GG), présentant

- au moins un capteur de cuisson (S) pour l'enregistrement temporel discret de valeurs de mesure concernant la cuisson (MW),
- une première mémoire de données (DS1), dans lequel l'appareil de cuisson ménager (GG) est aménagé afin d'enregistrer les valeurs de mesure concernant la cuisson (MW) enregistrées par l'au moins un capteur de cuisson (S) sous la forme d'au moins une courbe de mesure (MK), correspondant à un report temporel des valeurs de mesure concernant la cuisson (MW) déterminées,
- une deuxième mémoire de données (DS2) dans laquelle plusieurs références sont enregistrées, et
- un dispositif de traitement de données (DV) aménagé afin de comparer au moins une courbe de mesure enregistrée (MK) aux références correspondantes, et
- le dispositif de traitement de données (DV) est aménagé afin de déclencher au moins une action de l'appareil de cuisson ménager (GG) suite au résultat de la comparaison,

**caractérisé en ce que**

- les références sont des ensembles réduits de coefficients d'une transformation discrète d'une courbe de référence respective (RK1-RK4) et le dispositif de traitement de données (DV) est aménagé,
- afin de comparer les coefficients d'une transformation discrète de la courbe de mesure (MK) à un nombre identique de coefficients des courbes de référence respectives (RK1-RK4),
- d'en identifier la courbe de référence (RK2) dont la divergence par rapport à la courbe de mesure (MK) est la plus faible, et
- de déclencher l'au moins une action en connaissance de la courbe de référence identifiée (RK2).

**2.** Appareil de cuisson ménager (GG) selon la revendication 1, **caractérisé en ce que** le dispositif de traitement de données (DV) est aménagé afin d'exécuter la divergence au moyen de la méthode de la somme des divergences absolues.

**3.** Appareil de cuisson ménager (GG) selon l'une des revendications précédentes, **caractérisé en ce que** le dispositif de traitement de données (DV) est aménagé afin de déduire de la courbe de référence identifiée (RK2) au moins un paramètre de cuisson et d'utiliser cet au moins un paramètre de cuisson pour le pilotage d'un processus de cuisson en cours.

**4.** Appareil de cuisson ménager (GG) selon la revendication 3, **caractérisé en ce que** le dispositif de traitement de données (DV) est aménagé afin de déduire de la courbe de référence identifiée (RK2) au moins un paramètre de cuisson et d'utiliser cet au moins un paramètre de cuisson pour le pilotage d'un processus de cuisson en cours uniquement lorsque la divergence pour la courbe de référence identifiée (RK2) est inférieure à une valeur seuil prédéfinie.

**5.** Appareil de cuisson ménager (GG) selon l'une des revendications précédentes, **caractérisé en ce qu'**outre les coefficients une durée de cuisson respective est enregistrée pour chaque courbe de référence (RK1-RK4).

**6.** Appareil de cuisson ménager (GG) selon l'une des revendications précédentes, **caractérisé en ce que** le dispositif de traitement de données (DV) est aménagé afin de ne pas utiliser plus de 50 % des coefficients d'une pleine transformation.

**7.** Appareil de cuisson ménager (GG) selon l'une des revendications précédentes, **caractérisé en ce que** le dispositif de traitement des données (DV) est aménagé afin de ne pas prendre en compte un décalage de la courbe de mesure (MK) et des courbes de référence respectives (RK1-RK4).

**8.** Appareil de cuisson ménager (GG) selon l'une des revendications précédentes, **caractérisé en ce que** la transformation discrète est une transformation discrète de Fourier.

**9.** Appareil de cuisson ménager (GG) selon la revendication 8, **caractérisé en ce que** la transformation discrète de Fourier est une transformation discrète en cosinus.

**10.** Appareil de cuisson ménager (GG) selon la revendication 9, **caractérisé en ce que** le dispositif de traitement des données (DV) est aménagé afin d'utiliser, pour l'exécution de la transformation discrète en cosinus, des valeurs cosinus calculées par incrémentation, enregistrées dans un tableau de référence.

**11.** Appareil de cuisson ménager (GG) selon l'une des revendications précédentes, **caractérisé en ce que** le capteur de cuisson (S) est un capteur de température.

**12.** Appareil de cuisson ménager (GG) selon l'une des revendications précédentes, **caractérisé en ce que** l'appareil de cuisson ménager (GG) présente un espace de cuisson et le capteur de cuisson (S) est un capteur pour la détermination d'une concentration en gaz dans l'espace de cuisson, en particulier un capteur d'oxygène.

**13.** Procédé d'exploitation d'un appareil de cuisson ménager (GG) selon l'une des revendications précédentes, dans lequel

- des valeurs de mesure concernant la cuisson (MW) font l'objet d'un enregistrement temporel discret au moyen d'un capteur de cuisson (S) de l'appareil de cuisson ménager (GG),
- les valeurs de mesure concernant la cuisson (MW) sont enregistrées sous la forme d'au moins une courbe de mesure (MK) correspondant à un report temporel des valeurs de mesure concernant la cuisson (MW) établies,
- une courbe de mesure enregistrée (MK) est comparée à plusieurs références, dans lequel les références sont enregistrées sous la forme d'ensembles réduits de coefficients d'une transformation discrète d'une courbe de référence respective (RK1-RK4) dans l'appareil de cuisson ménager (GG), dans lequel
- les coefficients d'une transformation discrète de la courbe de mesure (MK) sont comparés à un nombre identique de coefficients des courbes de référence respectives (RK1-RK4) et
- la courbe de référence (RK2) dont la divergence par rapport à la courbe de mesure (MK) est la plus faible en est identifiée, et
- au moins une action est déclenchée suite à la comparaison en connaissance de la courbe de référence identifiée (RK2).

**14.** Procédé selon la revendication 13, dans lequel la comparaison s'effectue au moyen de la méthode de la somme des divergences absolues.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012222165 A1
- DE 102012222166 A1
- DE 102004049927 A1
- DE 102007040316 A1
- EP 1489361 A2